# EUROPEAN PATENT APPLICATION

(11) **EP 4 579 795 A1**
(43) Date of publication of application: **02.07.2025**
(21) Application number: 24850372.4
(22) Date of filing: 28.02.2024
(51) Int. Cl.: H01M 4/136, H01M 4/58, H01M 4/62, H01M 4/36, C01B 32/05, C01B 25/45, H01M 10/0525

(54) **COMPOSITE POSITIVE ELECTRODE MATERIAL AND PREPARATION METHOD THEREFOR, POSITIVE ELECTRODE PLATE, BATTERY AND ELECTRICAL APPARATUS**

(30) Priority: 07.11.2023 CN 202311470437
(71) Applicant: Contemporary Amperex Technology Co., Limited, Jiaocheng District Ningde Fujian 352100 (CN)
(72) Inventor: LI, Xiaojing, Ningde, Fujian 352100 (CN); BIE, Changfeng, Ningde, Fujian 352100 (CN); NI, Huan, Ningde, Fujian 352100 (CN); LIU, Na, Ningde, Fujian 352100 (CN)
(74) Representative: Jacob, Reuben Ellis
(86) International application number: PCT/CN2024/079040
(87) International publication number: WO 2025/097613

(57) **Abstract**

This application relates to the field of battery technology, and in particular, to a composite positive electrode material and a preparation method thereof, a positive electrode plate, a battery, and an electrical device. The composite positive electrode material includes a composite formed by a positive active material and carbon. In a particle structure of the composite, a mass ratio of a carbon content inside to a carbon content on a surface is (0.8 to 2): 1. In the composite positive electrode material, the distribution of carbon in the particles is uniform, thereby effectively improving the overall electronic conductivity of the material.

## Description

This application claims priority to Chinese Patent Application No. 202311470437.7, filed with China National Intellectual Property Administration on November 7, 2023 and entitled "COMPOSITE POSITIVE ELECTRODE MATERIAL AND PREPARATION METHOD THEREOF, POSITIVE ELECTRODE PLATE, BATTERY, AND ELECTRICAL DEVICE".

### TECHNICAL FIELD

This application relates to the field of battery technology, and in particular, to a composite positive electrode material and a preparation method thereof, a positive electrode plate, a battery, and an electrical device.

### BACKGROUND

A positive electrode material is one of key factors that affect performance of a battery. Some of currently commercialized positive electrode materials of batteries, such as LiFePO4 of an olivine structure, are widely used by virtue of characteristics such as a high capacity, cost-effectiveness, good safety performance, excellent cycle performance, and environmental friendliness. However, some positive electrode materials incur the problem of a low electronic conductivity, thereby limiting the improvement of battery performance.

### TECHNICAL PROBLEMS

In view of the above problem, this application provides a composite positive electrode material and a preparation method thereof, a positive electrode plate, a battery, and an electrical device to solve the problem that an electronic conductivity of a positive electrode material is low.

### TECHNICAL SOLUTIONS

According to a first aspect, this application provides a composite positive electrode material. The composite positive electrode material includes a composite formed by a positive active material and carbon. In a particle structure of the composite, a mass ratio of a carbon content inside to a carbon content on a surface is (0.8 to 2): 1.

In the composite positive electrode material according to this embodiment of this application, the mass ratio of the carbon content inside the particle to the carbon content on the surface of the particle is (0.8 to 2): 1. In other words, the carbon content inside the particle is close to the carbon content on the surface of the particle, or the carbon content inside the particle is greater than or equal to the carbon content on the surface of the particle. In this way, a good conductivity can also be achieved inside the particle by using a high carbon content, and the conductivity inside the particle is close to the conductivity on the surface of the particle, or the conductivity inside the particle is greater than or equal to the conductivity on the surface of the particle. In this way, the conductivity distribution of the composite positive electrode material is improved, and an excellent conductivity is exhibited inside the particle and on the surface of the particle, thereby effectively improving the overall electronic conductivity of the composite positive electrode material. The improved electronic conductivity can reduce the impedance of the composite positive electrode material and improve the C-rate performance of the composite positive electrode material.

In some embodiments, in a particle structure of the composite, a mass ratio of a carbon content inside to a carbon content on a surface is optionally (1 to 1.8): 1.

In the particle structure of the composite, the ratio of the carbon content inside to the carbon content on the surface affects the overall conductivity of the composite positive electrode material. An appropriate ratio of the carbon content improves the overall conductivity of the composite positive electrode material.

In some embodiments, the inside is a region within 60% of a radius of a particle from a center of the particle.

In some embodiments, the surface is a region beyond 60% of the radius from the center of the particle.

In some embodiments, a total carbon mass percent of the composite positive electrode material is 0.8% to 5%, and optionally 1% to 2%.

The total carbon content or total carbon mass percent of the composite positive electrode material means an aggregate carbon mass percent in the composite positive electrode material, and may be obtained by analysis with a sulfur-carbon analyzer. An appropriate carbon content improves the conductivity of the material while maintaining a relatively high content of positive active material in the composite positive electrode material and making full use of the characteristics such as a high capacity of the positive active material.

In some embodiments, particles of the composite include secondary particles.

On the one hand, experimental results show that in the composite formed by the positive active material and carbon, the secondary particles exhibit a higher conductivity. On the other hand, the structure of the secondary particles is characterized by agglomeration resistance and high dispersibility. After being made into a slurry, the secondary particles exhibit high processability. Therefore, the composite positive electrode material containing the structure of secondary particles can improve the processing performance of the composite positive electrode material. Specifically, when the composite positive electrode material is used to make a slurry, the viscosity of the resulting slurry rebounds scarcely, and the fluidity of the slurry is high.

In some embodiments, the Dᵥ₅₀ of the secondary particles of the composite is 2 µm to 9 µm, and optionally 5 µm to 9 µm.

In these embodiments of this application, the composite positive electrode material mainly exists in the form of secondary particles, and the Dᵥ₅₀ of the secondary particles is appropriate, thereby improving the conductivity and processing performance of the composite positive electrode material.

In some embodiments, the secondary particles of the composite are formed by agglomerating primary nanoparticles.

A secondary particle is formed by the aggregating primary particles. The primary particle is nano-sized, thereby shortening the ion diffusion path of the positive active material, and in turn, improving the ionic conductivity of the composite positive electrode material.

According to a second aspect, this application provides a method for preparing a composite positive electrode material, including:
providing a precursor solution, where a positive active material feedstock is dissolved in the precursor solution, and an insoluble metal-organic framework material is dispersed in the precursor solution;
performing crystallization on the precursor solution, so that the positive active material feedstock is crystallized with the metal-organic framework material used as a crystal nucleus, thereby obtaining a precursor; and
sintering the precursor in an inert atmosphere, so that the positive active material feedstock in the precursor reacts to form a positive active material, and the metal-organic framework material reacts to form carbon, thereby obtaining the composite positive electrode material.

In the preparation method according to this embodiment of this application, the positive active material feedstock is dissolved in the precursor solution, and the insoluble metal-organic framework material is dispersed in the precursor solution. During crystallization of the precursor solution, the soluble positive active material feedstock can form a precursor grain with the metal-organic framework material as a crystal nucleus by using the insoluble metal-organic framework material as a growth center.

During sintering, the metal-organic framework material as a crystal nucleus is carbonized. Specifically, an organic ligand in the material is carbonized. The generated carbon retains the three-dimensional skeleton structure of the metal-organic framework material, thereby forming a carbon skeleton. The carbon skeletons is of low volatility, and can increase residual carbon inside the composite positive electrode material particles instead of, like other carbon sources, forming loose and highly volatile carbon materials after carbonization and leaving most of the carbon volatilizes and deposits on the surface of the composite positive electrode material particles. Therefore, this technical solution increases the carbon content inside the composite positive electrode material particles and improves the uniformity of carbon distribution.

During sintering, the positive active material feedstock reacts at high temperature to form a positive active material. At the same time, the metal in the metal-organic framework material can also participate in the formation of the positive active material.

Therefore, by the preparation method according to this embodiment of this application, a composite containing a positive active material and carbon is produced. The carbon is distributed uniformly in the particles of the composite, thereby effectively improving the overall electronic conductivity of the material.

In some embodiments, a mass of the metal-organic framework material is 0.2% to 4%, and optionally 1.5% to 4% of a total mass of the positive active material feedstock.

The mass percent of the metal-organic framework material added as an important carbon source of the composite positive electrode material affects the total carbon content and carbon distribution of the composite positive electrode material. By controlling the mass percent of the metal-organic framework material to fall within a specified range, the composite positive electrode material can contain an appropriate carbon content. In addition, the distribution of carbon in the particles is regulated to improve the conductivity of the composite positive electrode material.

In some embodiments, the precursor solution further includes a soluble carbon source. Optionally, a total mass of the soluble carbon source and the metal-organic framework material is 1% to 10%, and optionally 3% to 7%, of a total mass of the positive active material feedstock.

By adding a soluble carbon source into the precursor solution, the soluble carbon source can decompose to generate carbon together with the metal-organic framework material during sintering, thereby regulating the carbon content and carbon distribution of the composite positive electrode material. In addition, the added soluble carbon source reduces the amount of the metal-organic framework material to be used and reduces cost.

In some embodiments, the precursor assumes a secondary particle structure.

By being sintered, the precursor forms a composite positive electrode material. In a case that the precursor assumes a secondary particle structure, the composite positive electrode material obtained by sintering also retains the secondary particle structure. Experimental results show that in the composite formed by the positive active material and carbon, the secondary particles exhibit a high conductivity. Moreover, the structure of the secondary particles is a structure formed by agglomerating primary particles, and is characterized by agglomeration resistance and high dispersibility. After being made into a slurry, the secondary particles exhibit high processability. Therefore, the precursor prepared before sintering assumes a secondary particle structure, thereby improving the conductivity and processing performance of the composite positive electrode material.

According to a third aspect, an embodiment of this application provides a positive electrode plate. The positive electrode plate includes the composite positive electrode material according to the first aspect of this application or a composite positive electrode material prepared by the preparation method according to the second aspect of this application.

With carbon distributed uniformly, the composite positive electrode material according to this embodiment of this application exhibits a high electronic conductivity. Therefore, a positive electrode plate containing the composite positive electrode material exhibits a low film resistance and high C-rate performance.

According to a fourth aspect, this application provides a battery. The battery includes the positive electrode plate according to the third aspect of this application.

The positive electrode plate contains a composite positive electrode material with uniform carbon distribution and a high electronic conductivity. When applied to a battery, the positive electrode plate enables the battery to exhibit a low internal resistance and high C-rate performance.

According to a fifth aspect, this application provides an electrical device, including the battery according to the fourth aspect of this application.

The battery disclosed in an embodiment of this application is applicable to an electrical device that uses a battery as a power supply and is applicable to various energy storage systems that use a battery as an energy storage unit, and is configured to provide electrical energy. The above battery exhibits the advantages of a low internal resistance and high C-rate performance. The low internal resistance is conducive to reducing the heat generated during charge and discharge of the battery, and improving the safety performance of the battery. The high C-rate performance is conducive to implementing fast charging of the battery. Therefore, after being applied to various electrical devices, the battery improves the user experience of various electrical devices, for example, by improving the safety of the electrical devices and implementing fast charging of the electrical devices.

### BRIEF DESCRIPTION OF DRAWINGS

To describe the technical solutions in some embodiments of this application more clearly, the following outlines the drawings to be used in the description of some embodiments of this application or the prior art. Evidently, the drawings outlined below are merely a part of embodiments of this application. A person of ordinary skill in the art may derive other drawings from such drawings without making any creative effort.
FIG. 1 is a SEM image of a composite positive electrode material according to Embodiment 1 of this application;
FIG. 2 is a curve showing how a viscosity of a positive electrode slurry changes with a standing time according to Embodiment 1 and Embodiment 2 of this application;
FIG. 3 shows a test result of fluidity of a positive electrode slurry according to Embodiment 1 and Embodiment 2 of this application;
FIG. 4 is a schematic diagram of a battery cell according to an embodiment of this application;
FIG. 5 is an exploded view of the battery cell shown in FIG. 4 according to an embodiment of this application;
FIG. 6 is a schematic diagram of a battery module according to an embodiment of this application;
FIG. 7 is a schematic diagram of a battery pack according to an embodiment of this application;
FIG. 8 is an exploded view of the battery pack shown in FIG. 7 according to an embodiment of this application; and
FIG. 9 is a schematic diagram of an electrical device that uses a battery as a power supply according to an embodiment of this application.

### List of reference numerals:

01-housing; 02-cover plate; 03-electrode assembly; 04-battery cell; 05-battery module; 06-upper box; 07-lower box.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the descriptions of some embodiments of this application, the term "at least one" means one or more, where "more" means two or more. "At least one of (the following)" or a similar expression means any combination of the items recited, that is, a combination of one or more of the items. For example, the phrases "at least one of a, b, or c" and "at least one of a, b, and c" represent: a, b, c, a&b, a&c, b&c, or a&b&c, where a, b, and c each may be a single item or a plurality of items.

Understandably, in various embodiments of this application, the sequence number of a step in a process does not mean the implementation order of the step. Some or all of the steps may be performed in parallel or in sequence. The implementation order of each process depends on the functionality and intrinsic logic of the process, without constituting any limitation on the implementation process of an embodiment of this application.

The mass or weight of the related constituents mentioned in the specification hereof not only indicates the specific content of each constituent, but also indicates the mass ratio between the constituents. Therefore, scaling up or down the content of the related constituents specified in the specification hereof still falls within the protection scope of the disclosure made in the specification hereof. Specifically, the mass described in the specification hereof may be in units such as µg, mg, g, kg, and the like that are well known in the chemical industry.

With the changes in energy and environment and the improvement of environmental awareness, the development of new energy that is more environment-friendly has become a demand. Secondary batteries produce no or little pollutants during production and use, and are highly environment-friendly, and therefore, are increasingly valued.

A positive electrode material is one of key factors that affect performance of a battery. Some of positive electrode materials of batteries, such as LiFePO₄ of an olivine structure, are widely used by virtue of characteristics such as a high capacity, cost-effectiveness, good safety performance, excellent cycle performance, and environmental friendliness. However, such positive electrode materials incur the problem of a low electronic conductivity. For example, the Li⁺ in LiFePO₄ is deintercalated through a one-dimensional structure channel, thereby resulting in low deintercalation efficiency and a low electronic conductivity of the LiFePO₄. The low electronic conductivity makes the positive electrode material incur a high impedance and low C-rate performance.

To cope with the problem of an insufficient electronic conductivity of the positive electrode material, a typical approach currently available in the market to alleviating the problem is carbon coating. A typical method of the carbon coating is to grind a carbon source together with a positive electrode material, or together with a positive electrode material feedstock (such as iron phosphate or a lithium source), and a precursor to form carbon source-coated particles, and then perform heat-treatment. However, due to the volatilization of carbon during the heat treatment, the carbon content inside the particles is very low. The carbon is mainly concentrated on the surface of the particles. The distribution of carbon inside the particle and outside the particle is not uniform. Therefore, the carbon coating method currently in practice can merely improve the conductivity between particles, but the conductivity inside the particle is still low, thereby impairing the overall electronic conductivity of the material, and producing a limited effect in reducing the impedance of the material and in improving the C-rate performance of the material. Therefore, how to achieve excellent C-rate performance and a low impedance of the positive electrode material has become a critical bottleneck in the development of positive electrode materials of batteries.

Based on the above problems, an embodiment of this application provides a composite positive electrode material. By adjusting the carbon content inside the particle and on the surface of the particle of the composite positive electrode material, the carbon content inside the particle is made close to the carbon content on the surface, or the carbon content inside the particle is made greater than or equal to the carbon content on the surface, thereby improving the distribution of carbon in the particle, and in turn, improving the electronic conductivity of the composite positive electrode material, reducing the impedance of the material, and improving the C-rate performance.

In addition, an embodiment of this application further provides a method for preparing a composite positive electrode material. During the preparation, a positive active material feedstock is crystallized by using a metal-organic framework material as a core, and then sintered. An organic ligand in the metal-organic framework material can form a carbon skeleton after the sintering. By virtue of the characteristic that the carbon skeleton is not prone to volatilize, carbon is retained inside the particles of the composite positive electrode material as much as practicable, thereby increasing the carbon content inside the particles of the composite positive electrode material, and improving the uniformity of carbon distribution of the material. The improved uniformity of carbon distribution can effectively improve the electronic conductivity of the composite positive electrode material, thereby reducing the impedance of the material and improving the C-rate performance.

The composite positive electrode material according to this embodiment of this application is applicable to preparing a positive electrode plate. The positive electrode plate is applicable to making a battery. The battery is applicable to various electrical devices, including but not limited to, a mobile phone, a tablet, a laptop computer, an electric toy, an electric tool, an electric power cart, an electric vehicle, a ship, a spacecraft, or the like.

### [Composite positive electrode material]

According to a first aspect, an embodiment of this application provides a composite positive electrode material. The composite positive electrode material includes a composite formed by a positive active material and carbon. In a particle structure of the composite, a mass ratio of a carbon content inside to a carbon content on a surface is (0.8 to 2): 1.

The composite means a combination of two or more different substances. The morphology of a composite particle of the composite positive electrode material may be observed by using a scanning electron microscope. With the scanning electron microscope, it can be observed that the composite positive electrode material contains a particle structure.

As used herein, the term "inside" of the composite particle means a region within 60% of a radius of a particle from a center of the particle, and the term "surface" means a region beyond 60% of the radius from the center of the particle. The chemical constituents of the composite may be determined by X-ray diffractometry (XRD) in combination with energy dispersive X-ray spectroscopy (EDS). Based on the characteristic peak of the XRD and characteristic peak of the EDS, it is determined that the composite contains a specified positive active material and carbon. Carbon content means a mass percent of carbon. The carbon content inside the particle and the carbon content on the surface of the composite particle may be measured by EDS. For example, the composite positive electrode material is buried into resin, and the composite positive electrode material cut off from the resin through argon sputtering by using a cross-section polisher, so as to expose the cross-section of particles of the composite positive electrode material. The EDS instrument is operated in a spot scan mode. Several points (for example, 5 points) are evenly selected in an inner region on the cross-section of the particle, and the instrument automatically analyzes the carbon content at each point. The carbon content values at the selected points are averaged out to obtain the carbon content inside the particle. Similarly, several points (for example, 5 points) are evenly selected in a surface region on the cross-section of the particle, and the instrument automatically analyzes the carbon content at each point. The carbon content values at the selected points are averaged out to obtain the carbon content on the surface of the particle.

In the composite positive electrode material according to this embodiment of this application, the mass ratio of the carbon content inside the particle to the carbon content on the surface of the particle is (0.8 to 2): 1. In other words, the carbon content inside the particle is close to the carbon content on the surface of the particle, or the carbon content inside the particle is greater than or equal to the carbon content on the surface of the particle. In this way, a good conductivity can also be achieved inside the particle by using a high carbon content, and the conductivity inside the particle is close to the conductivity on the surface of the particle, or the conductivity inside the particle is greater than or equal to the conductivity on the surface of the particle. In this way, the conductivity distribution of the composite positive electrode material is improved, and an excellent conductivity is exhibited inside the particle and on the surface of the particle, thereby effectively improving the overall electronic conductivity of the composite positive electrode material. The improved electronic conductivity can reduce the impedance of the composite positive electrode material and improve the C-rate performance of the composite positive electrode material.

In some embodiments, in the particle structure of the composite, the mass ratio of the carbon content inside to the carbon content on the surface is (0.8 to 2): 1, optionally (1 to 1.8): 1, and further optionally (1.5 to 1.8): 1. For example, in the particle structure of the composite, the mass ratio of the carbon content inside to the carbon content on the surface may be any one of 0.8: 1, 1: 1, 1.2: 1, 1.4: 1, 1.5: 1, 1.6: 1, 1.8: 1, 2: 1, or a range formed by any two thereof.

In the particle structure of the composite, the ratio of the carbon content inside to the carbon content on the surface affects the overall conductivity of the composite positive electrode material. An appropriate ratio of the carbon content improves the overall conductivity of the composite positive electrode material.

In some embodiments, the total carbon mass percent of the composite positive electrode material is 0.8% to 5%, optionally 1% to 2%, and further optionally 1.4% to 1.7%, for example, may be any one of 0.8%, 1%, 1.4%, 1.5%, 1.7%, 2%, 2.5%, 3%, 3.5%, 4%, 4.5%, 5%, or a range formed by any two thereof.

The total carbon content or total carbon mass percent of the composite positive electrode material means an aggregate carbon mass percent in the composite positive electrode material, and may be obtained by analysis with a sulfur-carbon analyzer. An appropriate carbon content improves the conductivity of the material while maintaining a relatively high content of positive active material in the composite positive electrode material and making full use of the characteristics such as a high capacity of the positive active material.

In some embodiments, particles of the composite include secondary particles. Optionally, the secondary particles assumes a spherical morphology.

A secondary particle is a particle structure larger than a primary particle in diameter and formed by agglomerating primary particles. The morphology of the particle structure of the composite may be observed by using a scanning electron microscope. With the scanning electron microscope, it can be seen that the composite particles include secondary particles, each secondary particle is formed by aggregating a plurality of primary particles, and the secondary particle assumes a spherical morphology.

On the one hand, experimental results show that in the composite formed by the positive active material and carbon, the secondary particles exhibit a high conductivity. On the other hand, the structure of the secondary particles is characterized by agglomeration resistance and high dispersibility. After being made into a slurry, the secondary particles exhibit high processability. Therefore, the composite positive electrode material containing the structure of secondary particles can improve the processing performance of the composite positive electrode material. Specifically, when the composite positive electrode material is used to make a slurry, the viscosity of the resulting slurry rebounds scarcely, and the fluidity of the slurry is high.

In addition, the secondary particles assume a spherical morphology. Therefore, the active metal in the positive active material is diffused along a uniform diffusion path in all directions, thereby improving the ionic conductivity of the composite positive electrode material. The spherical particles are more fluidic and dispersive than other morphologies, thereby improving the processing performance of the composite positive electrode material.

In some embodiments, the Dᵥ₅₀ of the secondary particles of the composite is 2 µm to 9 µm, optionally 5 µm to 9 µm, for example, may be any one of 2 µm, 3 µm, 4 µm, 5 µm, 6 µm, 7 µm, 8 µm, 9 µm, or a range formed by any two thereof.

The particle size distribution of a material is typically represented by a percentage of particles within each different particle diameter range in relation to the aggregate amount of the sample particles. The particle size distribution may be determined on diverse basis. For example, the particle size distribution may be a number-based particle size distribution, a length-based particle size distribution, a volume-based particle size distribution, a mass-based particle size distribution, or the like. Dᵥ₅₀, known as a volume median diameter, is used for evaluating a volume-based particle size distribution, and means a particle diameter corresponding to a point at which the cumulative volume of observed particles reaches 50% of the total volume of all sample particles in a volume-based particle size distribution curve, and is a diameter at which 50% of the sample particles are larger, and 50% of the sample particles are smaller. The Dᵥ₅₀ of particles may be determined with reference to the standard GB/T 19077-2016/ISO 13320: 2009 *Particles Size Analysis Laser Diffraction Methods.* In these embodiments of this application, the composite positive electrode material mainly exists in the form of secondary particles, and the Dᵥ₅₀ of the secondary particles is appropriate, thereby improving the conductivity and processing performance of the composite positive electrode material.

In some embodiments, the porosity of the secondary particles is 10% to 35%, optionally 20% to 35%, for example, may be any one of 10%, 15%, 20%, 25%, 30%, 35%, or a range formed by any two thereof.

The porosity of the secondary particles means a percentage of the volume of pores in the secondary particles in relation to the total volume of the secondary particles in a natural state. The porosity of the secondary particles may be determined by observing and analyzing the percentage of the volume of pores in a cross-section of the secondary particles by use of a scanning electron microscope SEM after the cross-section is obtained by sectioning the secondary particles.

**In** this embodiment of this application, the secondary particles is of a relatively high porosity, thereby making it convenient for the electrolyte solution to sufficiently infiltrate the secondary particles, and improving the ion conductivity. Moreover, with this porosity, the secondary particles assume a stable and firm structure, and are not prone to break.

**In** some embodiments, the secondary particles of the composite positive electrode material are formed by agglomerating primary nanoparticles. Optionally, the average particle diameter of the primary nanoparticles is 50 nm to 400 nm, and optionally 50 nm to 250 nm, for example, may be any one of 50 nm, 100 nm, 150 nm, 200 nm, 250 nm, 300 nm, 350 nm, 400 nm, or a range formed by any two thereof.

The average particle diameter of the primary nanoparticles means an average particle diameter of several primary nanoparticles, and may be determined by observing the material structure by use of a SEM and counting the particle diameters of all or part of the observed primary nanoparticles. For example, the composite positive electrode material may be observed by use of a SEM to obtain a SEM image. Several (for example, 50 to 100) primary nanoparticles may be selected from the image, the particle diameter of each primary nanoparticle is determined, and all the particle diameter values of the selected primary nanoparticles are averaged out to obtain an average particle diameter.

A secondary particle is formed by the aggregating primary particles. The primary particle is nano-sized, thereby shortening the ion diffusion path of the olivine-structured positive active material, and in turn, improving the ionic conductivity of the material.

**In** some embodiments, the positive active material includes one or more of M¹ₐM²_{1-b}A_{b}PO₄ or LiNiₓCo_{y}M³_{z}O₂, where M¹ includes at least one of Li or Na; M² includes at least one of Fe, Mn, Ni, or Co; A includes at least one of Ti, Ga, Sr, W, Mg, Si, Y, Zr, B, Mo, or La; and M³ includes one or more of Mn or Al; 0.98 ≤ a ≤ 1.1, 0 ≤ b ≤ 0.005, 0.8 ≤ x < 1, 0 < y < 0.2, 0 < z < 0.2, and x + y + z = 1.

As an example, a may be any one of 0.98, 0.99, 1, 1.1, or a range formed by any two thereof; b may be any one of 0, 0.0001, 0.0005, 0.001, 0.002, 0.003, 0.004, 0.005, or a range formed by any two thereof; x may be any one of 0.8, 0.85, 0.9, 0.95, 0.99, or a range formed by any two thereof; y may be any one of 0.01, 0.05, 0.1, 0.15, 0.19, or a range formed by any two thereof; and z may be any one of 0.01, 0.05, 0.1, 0.15, 0.19, or a range formed by any two thereof.

M¹ₐM²_{1-b}A_{b}PO₄ is an olivine-structured composite positive active material, such as LiFePO₄, LiMnPO₄, LiNiPO₄, or LiNiPO₄, or is one of various doped or composite olivine-structured positive active materials. Such positive active materials are of a low conductivity because the active metal M¹ in the materials is deintercalated through a one-dimensional structure channel that gives rise to low deintercalation efficiency. LiNiₓCo_{y}M³_{z}O₂ is a ternary positive active material, and is prone to form residual lithium and expand in volume during charge and discharge, thereby resulting in a low conductivity. The technical solution of this embodiment of this application is suitable for various positive active materials of deficient conductivity. By forming a composite from the positive active material and carbon and regulating the carbon content inside the composite particles and the carbon content on the surface of the particles, the carbon content inside the particle is made close to the carbon content on the surface of the particle, or the carbon content inside the particle is made greater than or equal to the carbon content on the surface of the particle. In this way, a good conductivity can also be achieved inside the particle by using a high carbon content, and the conductivity inside the particle is close to the conductivity on the surface of the particle, or the conductivity inside the particle is greater than or equal to the conductivity on the surface of the particle. In this way, the conductivity distribution of the composite positive electrode material is improved, and an excellent conductivity is exhibited inside the particle and on the surface of the particle, thereby improving the electronic conductivity of the positive active materials.

In some embodiments, a tap density of the composite positive electrode material is 1 g/cm³ to 2 g/cm³, optionally 1.3 g/cm³ to 1.8 g/cm³, for example, may be any one of 1 g/cm³, 1.2 g/cm³, 1.3 g/cm³, 1.4 g/cm³, 1.5 g/cm³, 1.6 g/cm³, 1.7 g/cm³, 1.8 g/cm³, 1.9 g/cm³, or 2 g/cm³, or a range formed by any two thereof.

The tap density means a density of powder in a container after the powder is tapped under specified conditions. The tap density reflects the properties such as fluidity and porosity of powder. The tap density may be determined by use of a tap densitometer with reference to GB/T 5162-2021 *Metallic Powders Determination of Tap Density.*

When the tap density is high, the composite positive electrode material with a higher mass can lead to a higher energy density of the electrode plate in a case of the same volume in a process of applying the composite positive electrode material to preparing the electrode plate. In other words, the tap density affects the energy density of the electrode plate. In addition, the tap density also reflects the porosity of the powder. With an appropriate porosity, the electrode plate achieves high performance of being infiltrated by the electrolyte solution, thereby facilitating transmission of ions. The composite positive electrode material according to this embodiment of this application possesses an appropriate tap density, thereby not only increasing the energy density, but also improving the electrolyte solution infiltration performance and accelerating ion transmission.

### [Method for preparing a composite positive electrode material]

According to a second aspect, an embodiment of this application provides a method for preparing a composite positive electrode material, including:
providing a precursor solution, where a positive active material feedstock is dissolved in the precursor solution, and an insoluble metal-organic framework material is dispersed in the precursor solution;
performing crystallization on the precursor solution, so that the positive active material feedstock is crystallized with the metal-organic framework material used as a crystal nucleus, thereby obtaining a precursor; and
sintering the precursor in an inert atmosphere, so that the positive active material feedstock in the precursor reacts to form a positive active material, and the metal-organic framework material reacts to form carbon, thereby obtaining the composite positive electrode material.

The positive active material feedstock referred to herein means an initial raw material for preparing a positive active material, for example, various metal sources, and non-metal sources. The positive active material feedstock being dissolved in the precursor solution means that part or all of the positive active material feedstock is dissolved in the precursor solution. The metal-organic framework material is a type of three-dimensional skeleton material formed by self-assembly of an organic ligand and a metal center. The insoluble metal-organic framework material being dispersed in the precursor solution means that the metal-organic framework material is insoluble in the precursor solution. The precursor means a precursor product from which a final composite positive electrode material product is derived, and can form a composite positive electrode material by sintering.

In the preparation method according to this embodiment of this application, the positive active material feedstock is dissolved in the precursor solution, and the insoluble metal-organic framework material is dispersed in the precursor solution. During crystallization of the precursor solution, the soluble positive active material feedstock can form a precursor grain with the metal-organic framework material as a crystal nucleus by using the insoluble metal-organic framework material as a growth center.

During sintering, the metal-organic framework material as a crystal nucleus is carbonized. Specifically, an organic ligand in the material is carbonized. The generated carbon retains the three-dimensional skeleton structure of the metal-organic framework material, thereby forming a carbon skeleton. The carbon skeletons is of low volatility, and can increase residual carbon inside the composite positive electrode material particles instead of, like other carbon sources, forming loose and highly volatile carbon materials after carbonization and leaving most of the carbon volatilizes and deposits on the surface of the composite positive electrode material particles. Therefore, this technical solution increases the carbon content inside the composite positive electrode material particles and improves the uniformity of carbon distribution.

During sintering, the positive active material feedstock reacts at high temperature to form a positive active material. At the same time, the metal in the metal-organic framework material can also participate in the formation of the positive active material.

Therefore, by the preparation method according to this embodiment of this application, a composite containing a positive active material and carbon is produced. The carbon is distributed uniformly in the particles of the composite, thereby effectively improving the overall electronic conductivity of the material.

Regarding the positive active material feedstock, different positive active materials are usually prepared from different types of feedstock. For example, the feedstock for preparing the olivine-structured positive active material M¹ₐM²_{1-b}A_{b}PO₄ may include a M¹ source, a phosphorus source, an M² source, and an A source. At least one of the M¹ source, the phosphorus source, the M² source, or the A source is dissolved in the precursor solution. One or more of such sources may be nanomaterials. M¹ includes at least one of Li or Na. M² includes at least one of Fe, Mn, Ni, or Co. The A includes at least one of Ti, Ga, Sr, W, Mg, Si, Y, Zr, B, Mo, or La. After the precursor solution crystallizes, the M¹ source, the phosphorus source, the M² source, and the A source jointly form a precursor grain with the metal-organic framework material as a crystal nucleus by using the insoluble metal-organic framework material as a growth center.

The M¹ source, the phosphorus source, the M² source, and the A source may be specifically selected with reference to the following:

The M¹ source includes at least one of a lithium source or a sodium source. The lithium source may include one or more of lithium dihydrogen phosphate, lithium hydrogen phosphate, lithium carbonate, lithium bicarbonate, or lithium hydroxide. The sodium source may include one or more of sodium dihydrogen phosphate, sodium hydrogen phosphate, sodium carbonate, sodium bicarbonate, or sodium hydroxide.

The M² source includes one or more of a nitrate of M², an acetate of M², a sulfate of M², or a chloride of M². For example, when M² includes Fe, the M² source includes an iron source. The iron source may include one or more of ferric nitrate, ferric acetate, ferrous acetate, ferric sulfate, ferrous sulfate, or ferrous chloride. When M² includes Mn, the M² source includes a manganese source. The manganese source may include one or more of manganese nitrate, manganese acetate, manganese sulfate, or manganese chloride. When M² includes Ni, the M² source includes a nickel source. The nickel source may include one or more of nickel nitrate, nickel acetate, nickel sulfate, or nickel chloride. When M² includes Co, the M² source includes a cobalt source. The cobalt source may include one or more of cobalt nitrate, cobalt acetate, cobalt sulfate, or cobalt chloride.

The phosphorus source includes one or more of phosphoric acid, ammonium dihydrogen phosphate, diammonium hydrogen phosphate, lithium dihydrogen phosphate, or sodium dihydrogen phosphate. Understandably, some of the phosphorus sources may be used as an M¹ source.

The A source includes one or more of an oxalate of A, an acetate of A, a sulfate of A, a chloride of A, a nitrate of A, or an oxide of A.

The mixing ratio between the M¹ source, the M² source, the A source, and the phosphorus source needs to enable formation of M¹ₐM²_{1-b}A_{b}PO₄, where 0.98 ≤ a ≤ 1.1, and 0 ≤ b ≤ 0.005.

For another example, the feedstock for preparing the ternary positive active material LiNiₓCo_{y}M³_{z}O₂ may include a lithium source, a nickel source, a cobalt source, and an M³ source. The M³ includes one or more of Mn or Al. At least one of the lithium source, the nickel source, the cobalt source, or the M³ source is dissolved in the precursor solution. One or more of such sources may be nanomaterials. In this case, after the precursor solution crystallizes, the lithium source, the nickel source, the cobalt source, and the M³ source jointly form a grain with the metal-organic framework material as a crystal nucleus by using the insoluble metal-organic framework material as a growth center. Regarding the lithium source, nickel source, cobalt source, and, in a case that M³ is Mn, the M³ source, the specific substances may be selected with reference to the above description about the lithium source, nickel source, cobalt source, and manganese source in the feedstock of M¹ₐM²_{1-b}A_{b}PO₄. When M³ is Al, the M³ source is an aluminum source. The aluminum source may include one or more of aluminum nitrate, aluminum acetate, aluminum sulfate, or aluminum chloride.

In addition, the mixing ratio between the lithium source, nickel source, cobalt source, and M³ source needs to enable formation of LiNiₓCo_{y}M³_{z}O₂, where 0.8 ≤ x < 1, 0 < y < 0.2, 0 < z < 0.2, and x + y + z = 1.

Regarding the metal-organic framework material, the metal elements contained in the metal-organic framework material may be the same as one or more metal elements in the positive active material. Optionally, the metal elements contained in the metal-organic framework material are the same as the main metal elements in the positive active material. For example, in a case that the positive active material includes M¹ₐM²_{1-b}A_{b}PO₄, the metal elements contained in the metal-organic framework material may include M². In a case that the positive active material includes LiNiₓCo_{y}M³_{z}O₂, the metal elements contained in the metal-organic framework material may include one or more of Ni, Co, or M³. In this way, during sintering, the metal elements in the metal-organic framework material can also form the related metal compound, and participate in the formation of the positive active material without introducing other impurity metals.

As an example, the metal-organic framework material may include one or more of a Fe-based metal-organic framework material, a Mn-based metal-organic framework material, a Ni-based metal-organic framework material, or a Co-based metal-organic framework material. Optionally, the metal-organic framework material includes one or more of MIL-88B (Fe), MIL-100 (Fe), MIL-53 (Fe), MIL-101 (Fe), MIL-88B (Mn), MIL-100 (Mn), MIL-53 (Mn), MIL-101 (Mn), MIL-88B (Ni), MIL-100 (Ni), MIL-53 (Ni), MIL-101 (Ni), MIL-88B (Co), MIL-100 (Co), MIL-53 (Co), or MIL-101 (Co).

The organic ligands in such metal-organic framework materials are carbonized during sintering. The generated carbon retains the three-dimensional skeleton structure of the metal-organic framework material, thereby forming a carbon skeleton. Neighboring carbons in these carbon skeleton structures are bound together by a strong acting force, and are relatively strong in terms of structure, and can be remained as much as practicable inside the particles of the composite positive electrode material, without incurring the phenomenon that most of the carbon volatilizes and deposits on the surface of the composite positive electrode material particles.

The metal-organic framework material may be prepared by the following method: reacting a metal source with an organic ligand under specified conditions to obtain a metal-organic framework material.

For example, a method for preparing MIL-88B (Fe) may include:
mixing an iron source with terephthalic acid, and pretreating the mixture to obtain an intermediate product; and
adding the intermediate product into ethanol, stirring and centrifuging mixture to obtain a solid product, and washing and drying the solid product.

The pretreatment may be performed by grinding, ball-milling, or other means. The pretreatment time may be 1 to 3 hours, for example, may be any one of 1 hour, 1.5 hours, 2 hours, 2.5 hours, 3 hours, or a range formed by any two thereof.

The mass ratio of the intermediate product to ethanol is controlled to be 1: (8 to 60), for example, any one of 1: 8, 1: 10, 1: 20, 1: 30, 1: 40, 1: 50, 1: 60, or a range formed by any two thereof.

The stirring time may be controlled to be 8 to 12 hours, for example, any one of 8 hours, 9 hours, 10 hours, 11 hours, 12 hours, or a range formed by any two thereof.

The entire preparation process of MIL-88B (Fe) may be performed at 10 °C to 40 °C, optionally at 20 °C to 30 °C, for example, any one of 10 °C, 20 °C, 30 °C, or 40 °C, or a range formed by any two thereof.

Understandably, MIL-88B (Fe) may also be prepared by other feasible methods. Meanwhile, different metal-organic framework materials may be prepared by a conventional method or directly purchased from the market.

In some embodiments, the mass of the metal-organic framework material is 0.2% to 4%, optionally 1.5% to 4%, for example, any one of 0.2%, 0.5%, 1%, 1.5%, 2%, 2.5%, 3%, 3.5%, 4%, or a range formed by any two thereof, of the total mass of the positive active material feedstock.

The mass percent of the metal-organic framework material added as an important carbon source of the composite positive electrode material affects the total carbon content and carbon distribution of the composite positive electrode material. By controlling the mass percent of the metal-organic framework material to fall within a specified range, the composite positive electrode material can contain an appropriate carbon content. In addition, the distribution of carbon in the particles is regulated to improve the conductivity of the composite positive electrode material.

In some embodiments, the precursor solution further includes a soluble carbon source. Optionally, the soluble carbon source includes one or more of sucrose, glucose, dextrin, citric acid, fructose, or starch. Optionally, the total mass of the soluble carbon source and the metal-organic framework material is 1% to 10%, optionally 3% to 7%, for example, any one of 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two thereof, of the total mass of the positive active material feedstock.

By adding a soluble carbon source into the precursor solution, the soluble carbon source can decompose to generate carbon together with the metal-organic framework material during sintering, thereby regulating the carbon content and carbon distribution of the composite positive electrode material. In addition, the added soluble carbon source reduces the amount of the metal-organic framework material to be used and reduces cost.

In some embodiments, the precursor solution further includes a dispersant. Optionally, the dispersant includes one or more of polyethylene glycol, polyvinyl alcohol, polyvinyl pyrrolidone, sodium dodecyl sulfate, or sodium lauryl sulfate.

By adding the dispersant into the precursor solution, this application can improve the dispersibility of the constituents in the precursor solution, improve the uniformity of the precursor solution, and facilitate formation of uniform precursor grains in the subsequent crystallization process.

In some embodiments, the solvent contained in the precursor solution includes water. Water as a solvent can well dissolve or disperse the constituents, and can be easily removed by drying, without being prone to side reactions.

In some embodiments, the precursor assumes a secondary particle structure. Optionally, the Dᵥ₅₀ of the secondary particles of the precursor is 3 µm to 15 µm, optionally 8 µm to 12 µm, for example, may be any one of 3 µm, 4 µm, 5 µm, 6 µm, 7 µm, 8 µm, 9 µm, 10 µm, 11 µm, 12 µm, 13 µm, 14 µm, 15 µm, or a range formed by any two thereof.

By being sintered, the precursor forms a composite positive electrode material. In a case that the precursor assumes a secondary particle structure, the composite positive electrode material obtained by sintering also retains the secondary particle structure. Experimental results show that in the composite formed by the positive active material and carbon, the secondary particles exhibit a high conductivity. Moreover, the structure of the secondary particles is a structure formed by agglomerating primary particles, and is characterized by agglomeration resistance and high dispersibility. After being made into a slurry, the secondary particles exhibit high processability. Therefore, the precursor prepared before sintering assumes a secondary particle structure, thereby improving the conductivity and processing performance of the composite positive electrode material.

In some embodiments, the crystallization method includes one or more of centrifugal spray or two-fluid spray. By granulating by means of centrifugal spray or two-fluid spray-drying, a precursor is formed in which the particle structure is mainly secondary particles. In this way, the particles of the composite positive electrode material obtained by sintering assume a secondary particle structure, thereby improving the processing performance of the composite positive electrode material.

In some embodiments, the inert atmosphere includes one or more of nitrogen, argon, or helium. Sintering in an inert atmosphere can decompose the metal-organic framework material and the soluble carbon source in the precursor to form carbon. The generated carbon will not be oxidized. At the same time, the positive active material feedstock in the precursor reacts to form a positive active material, thereby reducing side reactions.

In some embodiments, the sintering temperature is 600 °C to 850 °C, for example, any one of 600 °C, 650 °C, 700 °C, 750 °C, 800 °C, 850 °C, or a range formed by any two thereof; and the sintering time is 6 to 15 hours, for example, any one of 6 hours, 7 hours, 8 hours, 9 hours, 10 hours, 11 hours, 12 hours, 13 hours, 14 hours, 15 hours, or a range formed by any two thereof.

Optionally, a pre-sintering step is performed before the sintering. The pre-sintering temperature is 300 °C to 500 °C, for example, any one of 300 °C, 350 °C, 400 °C, 450 °C, 500 °C, or a range formed by any two thereof; and the pre-sintering time is 2 to 5 hours, for example, any one of 2 hours, 2.5 hours, 3 hours, 3.5 hours, 4 hours, 4.5 hours, 5 hours, or a range formed by any two thereof.

Optionally, the temperature may be raised to a desired level at a heating rate of 1 °C/min to 5 °C/min, for example, any one of 1 °C/min, 2 °C/min, 3 °C/min, 4 °C/min, 5 °C/min, or a range formed by any two thereof. As an example, the temperature may be raised to a desired pre-sintering temperature at a heating rate of 1 °C/min to 3 °C/min. After the pre-sintering step, the temperature may be raised to a desired sintering temperature at a heating rate of 3 °C/min to 5 °C/min.

By sintering the precursor at the above temperature, the metal-organic framework material and the soluble carbon source in the precursor can be decomposed to form carbon while the positive active material feedstock reacts to generate a positive active material. Each material reacts at an appropriate reaction rate during the sintering, thereby improving the structural uniformity of the composite positive electrode material.

### [Positive electrode plate]

According to a third aspect, an embodiment of this application provides a positive electrode plate. The positive electrode plate includes the composite positive electrode material according to the first aspect of this application or a composite positive electrode material prepared by the preparation method according to the second aspect of this application.

With carbon distributed uniformly, the composite positive electrode material according to this embodiment of this application exhibits a high electronic conductivity. Therefore, a positive electrode plate containing the composite positive electrode material exhibits a low film resistance and high C-rate performance.

The positive electrode plate typically includes a positive current collector and a positive active layer disposed on at least one side of the positive current collector. The positive active layer includes the composite positive electrode material, a conductive agent, a binder, and may also include other positive active materials such as lithium cobalt oxide and lithium manganese oxide, and optionally may also include a lithium supplement such as lithium nickel oxide or lithium ferrite.

The mass percent of the composite positive electrode material in the active layer may be 90% to 98%, optionally 95% to 98%, for example, any one of 90%, 91%, 92%, 93%, 94%, 95%, 96%, 97%, 98%, or a range formed by any two thereof.

The conductive agent may include one or more of acetylene black (SP), carbon nanotubes, conductive carbon black (super-P), Ketjen black, carbon fibers, or graphene. The mass percent of the conductive agent in the active layer may be, but is not limited to, 0.5% to 10%, optionally 1% to 5%, for example, any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two thereof.

The binder includes, but is not limited to, one or more of polyvinylidene fluoride (PVDF), polyimide (PI), polytetrafluoroethylene (PTFE), polybutyl acrylate (PBA), polyacrylonitrile (PAN), polyacrylic acid (PAA), polyacrylate salt, polyvinyl alcohol (PVA), sodium alginate (SA), or cyclodextrin (CD). The mass percent of the binder in the positive active layer may be, but is not limited to, 0.5% to 10%, for example, any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two thereof.

The positive current collector may be, but is not limited to, a metal current collector, a carbon current collector, a conductive resin current collector, a composite current collector of metal and resin, and more specifically, may be aluminum, nickel, titanium, iron or an alloy thereof, stainless steel, carbon fibers, carbon nanotubes, graphite, or the like.

### [Battery]

According to a fourth aspect, an embodiment of this application provides a battery. The battery includes the positive electrode plate according to the third aspect of this application.

The positive electrode plate contains a composite positive electrode material with uniform carbon distribution and a high electronic conductivity. When applied to a battery, the positive electrode plate enables the battery to exhibit a low internal resistance and high C-rate performance.

Generally, the battery may further include a negative electrode plate, an electrolyte, a separator, an outer package, and the like. In addition, the battery in this embodiment of this application may include one or more of a battery cell, a battery module, or a battery pack.

### 1. Negative electrode plate

The negative electrode plate may include a negative current collector and a negative active layer disposed on at least one side of the negative current collector and containing a negative active material, a binder, and a conductive agent.

The negative current collector may be, but is not limited to, a metal current collector, a carbon current collector, a conductive resin current collector, a composite current collector of metal and resin, and more specifically, may be copper, nickel, titanium, iron or an alloy thereof, stainless steel, carbon fibers, carbon nanotubes (CNT), graphite, or the like.

The negative active material may include one or more of graphite, hard carbon, soft carbon, mesocarbon microbeads, graphene, silicon, or silicon dioxide. The mass percent of the negative active material in the negative active layer may be, but is not limited to, 90% to 98%, optionally 95% to 98%, for example, any one of 90%, 91%, 92%, 93%, 94%, 95%, 96%, 97%, 98%, or a range formed by any two thereof.

The conductive agent in the negative electrode plate may include, but is not limited to, acetylene black (SP), carbon nanotubes, conductive carbon black (super-P), Ketjen black, carbon fibers, or graphene. The mass percent of the conductive agent in the negative active layer in the negative electrode plate may be, but is not limited to, 0.5% to 10%, optionally 1% to 5%, for example, any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a range formed by any two thereof.

The negative active layer further optionally includes a dispersant such as carboxymethyl cellulose (CMC). The mass percent of the dispersant in the negative active layer may be, but is not limited to, 0.5% to 5%, optionally 1% to 5%, as an example but not limited to, any one of 0.5%, 1%, 1.5%, 2%, 2.5%, 3%, 3.5%, 4%, 4.5%, 5%, or a range formed by any two thereof.

### 2. Electrolyte

The electrolyte may serve as a carrier for ion transmission in a battery. The electrolyte used in the battery in this embodiment of this application may be a solid electrolyte, as an example but not limited to, a polymer electrolyte, an inorganic solid electrolyte, or the like; or, the electrolyte may be an electrolyte solution. The electrolyte solution includes a solvent and a lithium salt dissolved in the solvent.

The solvent may be a nonaqueous organic solvent. For example, the solvent may include one or more of, and preferably two or more of: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), or ethyl butyrate (EB).

The lithium salt may include one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato) borate), LiBOB (lithium bis(oxalato) borate), LiPO2F₂ (lithium difluorophosphate), LiDFOP (lithium difluoro(oxalato) phosphate), or LiTFOP (lithium tetrafluoro(oxalato) phosphate). For example, the lithium salt may be one or more of LiPF₆ (lithium hexafluorophosphate), LiBF₄ (lithium tetrafluoroborate), LiBOB (lithium bis(oxalato)borate), LiDFOB (lithium difluoro(oxalato)borate), LiTFSI (lithium bis(trifluoromethanesulfonyl)imide), or LiFSI (lithium bis(fluorosulfonyl)imide).

The electrolyte solution further optionally includes other additives, as an example but not limited to, one or more of vinylene carbonate (VC), vinyl ethylene carbonate (VEC), fluoroethylene carbonate (FEC), difluoroethylene carbonate (DFEC), trifluoromethylethylene carbonate (TFPC), succinonitrile (SN), adiponitrile (ADN), glutaronitrile (GLN), hexanetrinitrile (HTN), 1,3-propane sultone (1,3-PS), ethylene sulfate (DTD), methylene methyl disulfonate (MMDS), 1-propylene-1,3-sultone (PST), 4-methylethylene sulfate (PCS), 4-ethylethylene sulfate (PES), 4-propylethylene sulfate (PEGLST), propylene sulfate (TS), 1,4-butane sultone (1,4-BS), ethylene sulfite (DTO), dimethyl sulfite (DMS), diethyl sulfite (DES), sulfonate cyclic quaternary ammonium salt, tris(trimethylsilyl)phosphate (TMSP), or tris(trimethylsilyl)borate (TMSB).

### 3. Separator

The battery further includes a separator stacked between the positive electrode plate and the negative electrode plate. The separator is configured to separate the positive electrode plate from the negative electrode plate, so as to obstruct free passage of electrons in the battery, prevent contact shorting between the two electrodes, and allow ions in the electrolyte to pass freely between the positive electrode and the negative electrode.

The separator may be any porous separator that is electrochemically stable and mechanically stable, for example, a single-layer or multi-layer film that includes one or more of glass fiber, non-woven fabric, polyethylene (PE), polypropylene (PP), or polyvinylidene difluoride (PVDF).

### 4. Outer package

The battery may include an outer package. The outer package may be configured to package an electrode assembly and an electrolyte, and the electrode assembly includes a positive electrode plate, a negative electrode plate, and a separator.

The outer package of the battery may be a hard shell such as a hard plastic shell, an aluminum shell, a steel shell, or the like; or, may be a soft package such as a pouch-type package. The soft package may be made of plastic such as polypropylene, polybutylene terephthalate, or polybutylene succinate.

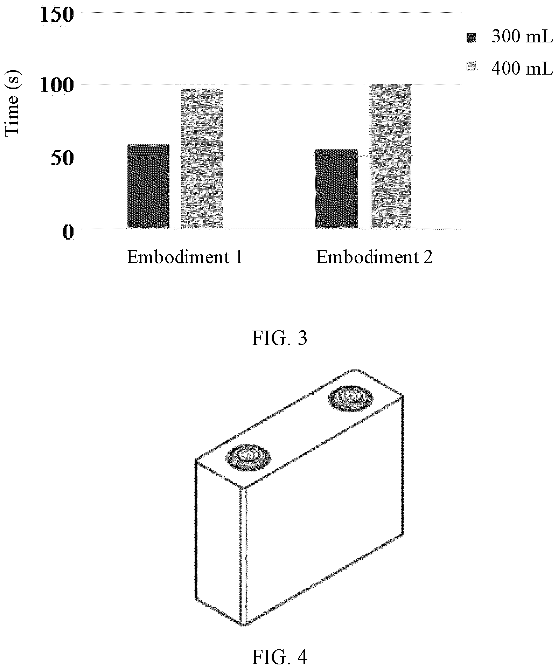

The shape of the outer package may be cylindrical, prismatic, or any other shape. For example, FIG. 4 shows a battery cell as an example in which the shape of the outer package is prismatic.

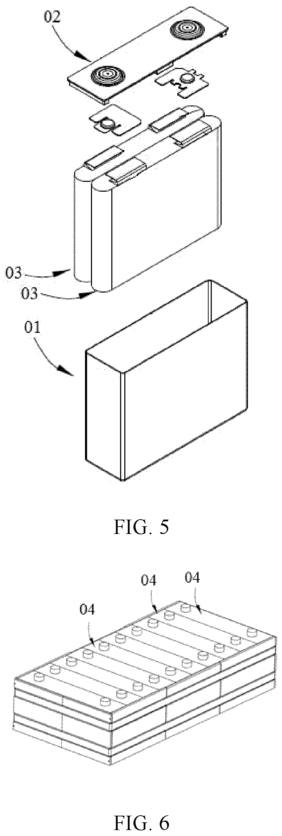

Referring to FIG. 5, the outer package may include a housing 01 and a cover plate 02. The housing 01 may include a bottom plate and a side plate connected to the bottom plate. The bottom plate and the side plate close in to form an accommodation cavity. An opening that communicates with the accommodation cavity is created on the housing 01. The cover plate 02 can fit and cover the opening to close the accommodation cavity. The positive electrode plate, the negative electrode plate, and the separator may be made into the electrode assembly 03 by winding or stacking. One or more electrode assemblies 03 are packaged in the accommodation cavity. The electrolyte solution infiltrates in the electrode assembly 03.

### 5. Battery cell, battery module, and battery pack

The battery in this embodiment of this application may be at least one of a battery cell, a battery module, or a battery pack. Depending on the packaging form, batteries are categorized into a battery cell, a battery module, and a battery pack. The battery cell is an elementary unit of the secondary battery, and includes an electrode assembly and an electrolyte. The electrode assembly typically includes a positive electrode plate, a negative electrode plate, and a separation piece. The positive electrode and the negative electrode are alternately stacked up. The separator is disposed between the positive electrode plate and the negative electrode plate to serve a separation function, so as to obtain a bare cell. Alternatively, the stacked structure is wound to form a battery cell. The battery cell is put into a shell, an electrolyte solution is injected, and the shell is sealed to obtain a battery cell. The battery cell works primarily by shuttling the metal ions in the electrolyte between the positive electrode plate and the negative electrode plate.

In some battery packaging technologies, one or more battery cells may be combined to form a battery module first, and then one or more battery modules are assembled to form a battery pack. In some other battery packaging technologies, one or more battery cells may be directly mounted in a box to form a battery pack, without forming the battery module as an intermediate state, thereby reducing the mass of the battery pack and increasing the energy density of the battery.

Referring to FIG. 6, which shows a battery module as an example, in the battery module, a plurality of battery cells 04 may be arranged sequentially along a length direction of the battery module. Alternatively, the secondary batteries may be arranged in any other manner. Further, the plurality of battery cells 04 may be fixed by a fastener.

Optionally, the battery module may further include a shell that provides an accommodation space. The plurality of battery cells 04 are accommodated in the accommodation space.

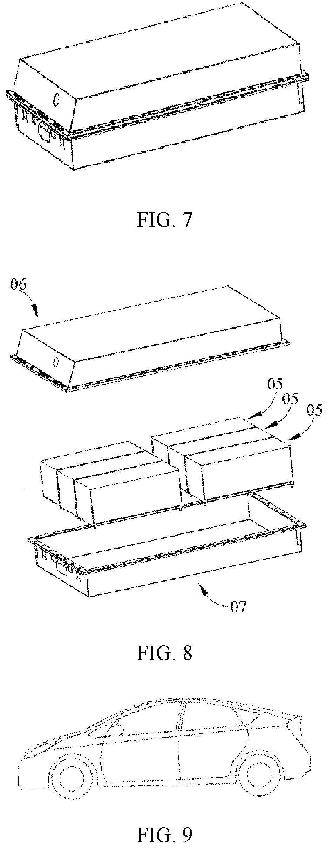

Referring to FIG. 7 and FIG. 8, which show a battery pack as an example, the battery pack may contain a battery box and a plurality of battery modules 05 disposed in the battery box. The battery box includes an upper box 06 and a lower box 07. The upper box 06 fits the lower box 07 to form a closed space for accommodating the battery modules 05. The plurality of battery modules 05 may be arranged in the battery box in any manner.

### [Electrical device]

An embodiment of this application further provides an electrical device, including the battery disclosed in the fourth aspect above.

The battery disclosed in an embodiment of this application is applicable to an electrical device that uses a battery as a power supply and is applicable to various energy storage systems that use a battery as an energy storage unit, and is configured to provide electrical energy. The above battery exhibits the advantages of a low internal resistance and high C-rate performance. The low internal resistance is conducive to reducing the heat generated during charge and discharge of the battery, and improving the safety performance of the battery. The high C-rate performance is conducive to implementing fast charging of the battery. Therefore, after being applied to various electrical devices, the battery improves the user experience of various electrical devices, for example, by improving the safety of the electrical devices and implementing fast charging of the electrical devices.

The electrical device may be, but is not limited to, a mobile phone, a tablet, a notebook computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like. The battery cell, battery module, or battery pack as a battery may be selected for use in the electrical device according to practical requirements.

FIG. 9 shows an electrical device as an example. The electrical device may be a battery electric vehicle, a hybrid electric vehicle, a plug-in hybrid electric vehicle, or the like. The electrical device may employ a battery pack or a battery module in order to meet the requirements of the electrical device on a high power and a high energy density of the battery.

The following describes some embodiments of this application in detail. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

The following further expounds this application by using an olivine-structured composite positive electrode material as an example, in which the positive active material in the composite positive electrode material is an olivine-structured positive active material. Understandably, such embodiments are merely intended to illustrate this application but not to limit the scope of this application. This application is not limited to the olivine-structured composite positive electrode material, and is also applicable to other positive electrode materials that suffers a low conductivity.

### [Composite positive electrode material]

### Embodiment 1

This embodiment provides a composite positive electrode material. A method for preparing the composite positive electrode material includes the following steps:

### (1) Preparing a metal-organic framework material MIL-88B (Fe)

Mixing 0.71 kg of Fe(NO₃)₃ ·9H₂O and 0.29 kg of terephthalic acid evenly, and then mechanically ball-mixing the mixture at normal temperature of 23 °C at a speed of 450 rpm for 2 hours to obtain an intermediate product. Taking out the intermediate product, transferring the intermediate product into a glass vial, adding ethanol, mixing the intermediate product and the ethanol at a mass ratio of 1: 30. Stirring at normal temperature of 23 °C at a speed of 600 rpm for 10 hours, and centrifuging the mixture to obtain a product. Washing the product with ethanol several times, and vacuum-drying the product to obtain 0.43 kg of nano-sized MIL-88B (Fe) material.

### (2) Preparing a composite positive electrode material

(2-1) Adding 2.29 kg of lithium dihydrogen phosphate, 0.009 kg of titanium dioxide, 5.00 kg of ferric acetate, 0.119 kg of MIL-88B (Fe), 0.22 kg of glucose, and 0.119 kg of polyethylene glycol into 11.0 kg of pure water, and stirring well.

(2-2) Granulating the resulting solution in step (2-1) through two-fluid atomization at a feed frequency of 4 Hz and an air intake rate of 6.0 m³/h to form a precursor powder of a secondary particle structure with Dᵥ₅₀ being 8.7 µm.

(2-3) Sintering the resulting material in step (2-2) in an inert atmosphere. Specifically, heating the material to 400 °C at a rate of 2 °C/min in a nitrogen atmosphere, keeping the temperature for 3 hours, and then heating the material to 730 °C at a rate of 3 °C/min, and keeping the temperature for 10 hours; and then cooling the material naturally to room temperature, and sieving the material to obtain a composite positive electrode material.

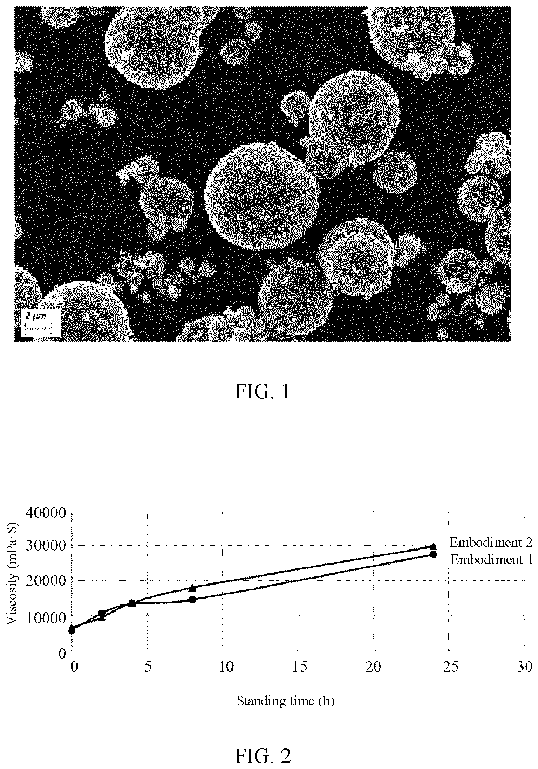

A scanning electron microscope image of the composite positive electrode material is shown in FIG. 1. As can be seen from the drawing, the material assumes a spherical secondary particle structure formed by agglomerating primary nanoparticles. The average particle diameter of the primary nanoparticles is 125 nm, and the Dᵥ₅₀ of the secondary particles is 7.1 µm. Based on the mixing ratio between feedstock constituents in the preparation process, by analyzing the composite positive electrode material, it is determined that the composite positive electrode material is a composite of LiFe_{0.95}Ti_{0.005}PO₄ and carbon, in which the total carbon content is 1.45% and the ratio of the carbon content inside the secondary particle to the carbon content on the surface of the secondary particle is 1.5: 1.

### Embodiment 2

This embodiment is identical to Embodiment 1 except that, in the preparation method, the amount of MIL-88B (Fe) added in step (2-1) is 0.017 kg.

In the prepared composite positive electrode material, the average particle diameter of the primary nanoparticles agglomerated to form secondary particles is 175 nm, and the Dᵥ₅₀ of the secondary particles is 6.9 µm; the total carbon content is 1.30%, and the ratio of the carbon content inside the secondary particle to the carbon content on the surface of the secondary particle is 1.1: 1.

### Embodiment 3

This embodiment is identical to Embodiment 1 except that, in the preparation method, the amount of MIL-88B (Fe) added in step (2-1) is 0.27 kg.

In the prepared composite positive electrode material, the average particle diameter of the primary nanoparticles agglomerated to form secondary particles is 150 nm, and the Dᵥ₅₀ of the secondary particles is 7.2 µm; the total carbon content is 1.65%, and the ratio of the carbon content inside the secondary particle to the carbon content on the surface of the secondary particle is 1.8: 1.

### Embodiment 4

This embodiment provides a composite positive electrode material. A method for preparing the composite positive electrode material includes the following steps:

### (1) Preparing a metal-organic framework material MIL-88B (Fe)

Mixing 0.71 kg of Fe(NO₃)₃·9H₂O and 0.29 kg of terephthalic acid evenly, and then mechanically ball-mixing the mixture at normal temperature of 23 °C at a speed of 450 rpm for 2 hours to obtain an intermediate product. Taking out the intermediate product, transferring the intermediate product into a glass vial, adding ethanol, mixing the intermediate product and the ethanol at a mass ratio of 1: 30. Stirring at normal temperature of 23 °C at a speed of 600 rpm for 10 hours, and centrifuging the mixture to obtain a product. Washing the product with ethanol several times, and vacuum-drying the product to obtain 0.43 kg of nano-sized MIL-88B (Fe) material.

### (2) Preparing a composite positive electrode material

(2-1) Adding 1.19 kg of lithium dihydrogen phosphate, 0.005 kg of titanium dioxide, 2.0 kg of ferric acetate, 3.45 kg of manganese acetate tetrahydrate, 0.121 kg of MIL-88B (Fe), 0.220 kg of glucose, and 0.119 kg of polyethylene glycol into 14 kg of pure water, and stirring well.

(2-2) Granulating the resulting solution in step (2-1) through two-fluid atomization at a feed frequency of 4 Hz and an air intake rate of 6.0 m³/h to form a precursor powder of a secondary particle structure with Dᵥ₅₀ being 8.9 µm.

(2-3) Sintering the resulting material in step (2-2) in an inert atmosphere. Specifically, heating the material to 400 °C at a rate of 2 °C/min in a nitrogen atmosphere, keeping the temperature for 3 hours, and then heating the material to 730 °C at a rate of 3 °C/min, and keeping the temperature for 10 hours; and then cooling the material naturally to room temperature, and sieving the material to obtain a composite positive electrode material.

As shown in a scanning electron microscopy image of the composite positive electrode material, the material assumes a spherical secondary particle structure formed by agglomerating primary nanoparticles. The average particle diameter of the primary nanoparticles is 125 nm, and the Dᵥ₅₀ of the secondary particles is 7.3 µm. Based on the mixing ratio between feedstock constituents in the preparation process, by analyzing the composite positive electrode material, it is determined that the composite positive electrode material is a composite of LiMn_{1.23}Fe_{0.75}Ti_{0.005}PO₄ and carbon, in which the total carbon content is 1.43% and the ratio of the carbon content inside the secondary particle to the carbon content on the surface of the secondary particle is 1.4: 1.

### Comparative Embodiment 1

This comparative embodiment is identical to Embodiment 1 except that, in the preparation method, no MIL-88B (Fe) is added in step (2-1).

The average particle diameter of the primary particles of the resulting composite positive electrode material is 225 nm, and the Dᵥ₅₀ of the secondary particles is 7.3 µm; the total carbon content is 1.24%, and the ratio of the carbon content inside the secondary particle to the carbon content on the surface of the secondary particle is 0.6: 1.

### Comparative Embodiment 2

This comparative embodiment is identical to Embodiment 1 except that, in the preparation method, no MIL-88B (Fe) is added in step (2-1), and the mass of the glucose is increased to 0.25 kg.

The average particle diameter of the primary particles of the resulting composite positive electrode material is 225 nm, and the Dᵥ₅₀ of the secondary particles is 7.5 µm; the total carbon content is 1.48%, and the ratio of the carbon content inside the secondary particle to the carbon content on the surface of the secondary particle is 0.6: 1.

### Comparative Embodiment 3

This comparative embodiment is identical to Embodiment 4 except that, in the preparation method, no MIL-88B (Fe) is added in step (2-1).

The average particle diameter of the primary particles of the resulting composite positive electrode material is 200 nm, and the Dᵥ₅₀ of the secondary particles is 7.1 µm; the total carbon content is 1.24%, and the ratio of the carbon content inside the secondary particle to the carbon content on the surface of the secondary particle is 0.7: 1.

The structures of the composite positive electrode materials in different embodiments and comparative embodiments are shown in Table 1 and Table 2.

The tap density and porosity of the composite positive electrode materials in different embodiments and comparative embodiments are tested. The test results are shown in Table 1 and Table 2.

**Table 1**

| | Average diameter of primary particles (nm) | Dᵥ₅₀ of secondary particles (µm) | Total carbon content (%) | Ratio of carbon content inside to carbon content on surface of secondary particle | Porosity of secondary particle (%) | Tap density (g/cm³) |
|---|---|---|---|---|---|---|
| Embodiment 1 | 125 | 7.1 | 1.45 | 1.5: 1 | 26 | 1.54 |
| Embodiment 2 | 175 | 6.9 | 1.30 | 1.1: 1 | 20 | 1.65 |
| Embodiment 3 | 150 | 7.2 | 1.65 | 1.8: 1 | 33 | 1.34 |
| Comparative Embodiment 1 | 225 | 7.3 | 1.24 | 0.6: 1 | 16 | 1.80 |
| Comparative Embodiment 2 | 225 | 7.5 | 1.48 | 0.6: 1 | 18 | 1.59 |

**Table 2**

| | Average diameter of primary particles (nm) | Dᵥ₅₀ of secondary particles (µm) | Total carbon content (%) | Ratio of carbon content inside to carbon content on surface of secondary particle | Porosity of secondary particle (%) | Tap density (g/cm³) |
|---|---|---|---|---|---|---|
| Embodiment 4 | 125 | 7.3 | 1.43 | 1.4: 1 | 28 | 1.40 |
| Comparative Embodiment 3 | 200 | 7.1 | 1.24 | 0.7: 1 | 17 | 1.55 |

As shown in Table 1 and Table 2, in Embodiments 1 to 4, the composite positive electrode material assumes a secondary particle structure. The carbon distribution of the secondary particles is relatively uniform. Specifically, the carbon content inside the secondary particle is close to the carbon content on the surface, or the carbon content inside the secondary particle is greater than the carbon content on the surface. This is mainly attributed to the MIL-88B (Fe) added during the preparation. During the two-fluid granulation, the MIL-88B (Fe) can serve as a growth center of other types of feedstock to form precursor grains that use the MIL-88B (Fe) as a core. During the sintering, the organic ligand contained in the MIL-88B (Fe) in the core of the precursor grain can be decomposed to form a carbon skeleton. The carbon skeleton can remain as much as practicable inside the particle instead of just depositing on the surface of the particle, thereby improving the carbon distribution in the composite positive electrode material. In addition, in Embodiments 1 to 4, the secondary particles of the composite positive electrode material further possess a high porosity. This is mainly attributed to the gas generated during the decomposition of the MIL-88B (Fe) and glucose. The gas is volatilized to endow the secondary particles of the composite positive electrode material with an appropriate porosity. The appropriate porosity favorably endows the composite positive electrode material with a sufficient tap density.

In contrast, in Comparative Embodiments 1 to 3, no MIL-88B (Fe) is added during the preparation, and the carbon content inside the secondary particle is significantly lower than the carbon content on the surface of the secondary particle. The ratio of the carbon content inside to the carbon content on the surface of the secondary particle is 0.7: 1 or less, and the porosity of the secondary particle is reduced.

### [Positive electrode plate, lithium-ion battery]

### 1. Positive electrode plate

The composite positive electrode material in each embodiment and each comparative embodiment is applied to preparing a positive electrode plate. The positive electrode plate includes an aluminum foil and a positive active layer disposed on both surfaces of the aluminum foil. The positive active layer includes the composite positive electrode material in each embodiment or comparative embodiment, and also includes conductive carbon black as a conductive agent and PVDF as a binder when necessary.

A method for preparing the positive electrode plate includes: mixing 96.0 wt% composite positive electrode material, 1.5 wt% conductive carbon black, and 2.5 wt% PVDF, and then adding N-methyl-pyrrolidone, stirring well to disperse the constituents and obtain a positive electrode slurry; coating an aluminum foil with the positive electrode slurry, oven-drying the slurry, and cold-pressing the foil to obtain a positive electrode plate coated with the active material at a concentration of 25.0 g/mm² and endowed with a compaction density of 2.40 g/cm².

### 2. Lithium-ion battery

A lithium-ion battery includes a bare cell formed by the positive electrode plate, a negative electrode plate made of graphite, and a separator, and includes an electrolyte solution and an outer package. The bare cell is put into the outer package, and the electrolyte solution infiltrates the bare cell.

A method for preparing the negative electrode plate includes: mixing 95.5 wt% negative active material (artificial graphite), 1.0 wt% conductive agent (conductive carbon black), 2.0 wt% binder (styrene-butadiene rubber SBR), and 1.5 wt% thickener (sodium carboxymethyl cellulose CMC), adding deionized water, and dispersing the constituents to form a negative electrode slurry. Coating both surfaces of the copper foil with the negative electrode slurry, and oven-drying, cold-pressing, cutting, and slitting the foil to obtain a negative electrode plate. The coating areal density of the negative electrode plate is 11.0 g/cm², and the compaction density of the negative electrode plate is 1.65 g/cm³.

The electrolyte solution is a 1.0 mol/L lithium hexafluorophosphate (LiPF₆) solution, in which the solvent is ethylene carbonate (EC) and dimethyl carbonate (DMC) mixed at a volume ratio of 1: 1.

Stacking the negative electrode plate, the separator, and the positive electrode plate sequentially in such a way that the separator is located between the positive electrode and the negative electrode to serve a function of isolation, and winding the stacked structure to obtain a bare cell; Putting the bare cell into an outer package, injecting the prepared electrolyte solution, and performing packaging, injection, chemical formation, degassing, and other steps to obtain a lithium-ion battery.

### (1) Slurry processing performance

The viscosity and fluidity of the positive electrode slurries corresponding to Embodiment 1 and Embodiment 2 are shown in FIG. 2 and FIG. 3.

As can be seen from FIG. 2, the viscosity of the positive electrode slurry in Embodiment 1 and Embodiment 2 changes scarcely during the static standing, and still remains low after 24 hours of static standing. The low viscosity is conducive to improving fluidity. In addition, FIG. 3 also shows that the positive electrode slurries corresponding to Embodiment 1 and Embodiment 2 are of high fluidity during static standing.

The results show that, by making the composite positive electrode material into secondary particles, the viscosity of the corresponding positive electrode slurry rebounds scarcely, and the fluidity of the slurry is high, thereby improving the processing performance of the material.

### (2) Electrochemical performance

The film resistance of each positive electrode plate as well as the C-rate performance and impedance of the lithium-ion battery are shown in Table 3 and Table 4 below.

**Table 3**

| Item | Film resistance (mΩ) | 5C capacity retention rate (%) | DCR (mΩ) | | |
|---|---|---|---|---|---|
| | | | 25 °C 50%SOC | 25 °C 10%SOC | -25 °C 20%SOC |
| Embodiment 1 | 0.121 | 94.5 | 31.4 | 71.6 | 363.3 |
| Embodiment 2 | 0.151 | 92.3 | 33.5 | 79.7 | 379.3 |
| Embodiment 3 | 0.105 | 95.9 | 31.8 | 60.9 | 359.8 |
| Comparative Embodiment 1 | 0.212 | 88.2 | 55.6 | 107.0 | 497.3 |
| Comparative Embodiment 2 | 0.172 | 91.0 | 34.4 | 88.4 | 435.3 |

**Table 4**

| Item | Film resistance (mΩ) | 5C capacity retention rate (%) | DCR (mΩ) | | |
|---|---|---|---|---|---|
| | | | 25 °C 50%SOC | 25 °C 10%SOC | -25 °C 20%SOC |
| Embodiment 4 | 0.238 | 93.6 | 45.3 | 85.3 | 389.6 |
| Comparative Embodiment 3 | 0.380 | 86.3 | 58.7 | 114.8 | 524.9 |

As can be seen from the table, in contrast to Comparative Embodiments 1 and 2, the positive electrode plate containing the composite positive electrode materials of Embodiments 1 to 3 possesses a lower film resistance. Similarly, the film resistance in Embodiment 4 is lower than that in Comparative Embodiment 3.

In addition, the lithium-ion batteries corresponding to Embodiments 1 to 4 exhibit a high 5C capacity retention rate and excellent C-rate performance; in contrast, the C-rate performance in Comparative Embodiments 1 and 2 is significantly lower than that in Embodiments 1 to 3, and the C-rate performance in Comparative Embodiment 3 is deteriorated compared to Embodiment 4.

In terms of the direct-current resistance (DCR) of the lithium-ion battery, the DCRs in Embodiments 1 to 3 at different temperatures and different SOC levels are significantly lower than the DCRs in Comparative Embodiments 1 and 2. In addition, the DCRs in Embodiment 4 at different temperatures and different SOC levels are even lower than the DCR in Comparative Embodiment 3.

The test results show that, by adjusting the ratio of the carbon content inside the secondary particle to the carbon content on the surface of the secondary particle of the composite positive electrode material, the carbon content inside the secondary particle is made close to the carbon content on the surface, or the carbon content inside the secondary particle is made greater than the carbon content on the surface, thereby improving the carbon distribution of the composite positive electrode material, effectively improving the electronic conductivity and ionic conductivity of the composite positive electrode material, and improving the low-temperature performance of the composite positive electrode material. The improvement of the carbon content distribution of the secondary particles of the composite positive electrode material is attributed to the insoluble MIL-88B (Fe) added as a carbon source during the preparation of the composite positive electrode material. The MIL-88B (Fe) may be used as a precursor core. The carbon skeleton produced during the sintering can increase the carbon content inside the secondary particles of the composite positive electrode material.

### Performance Test Methods

### (1) Volume median diameter Dᵥ₅₀

Taking an appropriate amount of particle specimen (the concentration of the specimen needs to ensure that the level of obscuration is 8% to 12%); adding 20 mL of deionized water, sonicating the solution externally for 5 minutes at a sonication frequency of 53 KHz and a sonication power of 120 W to ensure thorough dispersion of the specimen, and then measuring the specimen by use of a Malvern 3000 (MasterSizer 3000) laser particle size analyzer with reference to the standard GB/T19077-2016/ISO 13320: 2009.

### (2) Average particle diameter of primary particles

Running the Nano Measurer 1.2 software, opening the SEM image (at a magnification of 5K) to be evaluated, setting a scale bar, and then measuring the long sides of the primary particles. Selecting at least 80 primary particles from each image. The software automatically calculates the average particle size of the primary particles.

### (3) Carbon content

The total carbon content of the composite positive electrode material is measured by using a carbon-sulfur analyzer.

A method for determining the ratio of the carbon content inside to the carbon content on the surface of the secondary particle in the composite positive electrode material is: measuring the carbon content on the cross-sectional surface of the secondary particle and the carbon content inside the particle by using an EDS, and calculating the ratio. Specifically, the EDS instrument is operated in a spot scan mode. 5 points are evenly selected in an inner region on the cross-section of the secondary particle, and the instrument automatically analyzes the carbon content at each point. The carbon content values at the selected points are averaged out to obtain the carbon content inside the particle. Similarly, 5 points are evenly selected in a surface region on the cross-section of the secondary particle, and the instrument automatically analyzes the carbon content at each point. The carbon content values at the selected points are averaged out to obtain the carbon content on the surface of the particle. A method for obtaining the cross-section of the secondary particle is: burying the composite positive electrode material into resin, and cutting off the composite positive electrode material from the resin through argon sputtering by using a cross-section polisher, so as to expose the cross-section of secondary particle of the composite positive electrode material. As used herein, the term "inner region" of the secondary particle means a region within 60% of a radius of the particle from the center of the particle, and the term "surface region" of the particle means a region beyond 60% of the radius from the center of the particle.

### (4) Tap density

Loading a specimen steadily into a graduated cylinder (when a 25 mL graduated cylinder is in use, the volume of the loaded specimen just needs to reach the space between the 21 mL and 24 mL scale lines), wiping the surface of the cylinder clean with dust-free paper, measuring the weight, sealing the graduated cylinder, setting the number of taps of the instrument to 5000, setting the tapping frequency to 250 taps/min, reading the scale visually, and calculating the tap density of the specimen by using the density formula: ρ = m/v, based on the mass m and volume v.

### (5) Porosity of the secondary particle

Burying the composite positive electrode material into resin, and cutting off the composite positive electrode material from the resin through argon sputtering by using a cross-section polisher, so as to expose the cross-section of the secondary particles of the composite positive electrode material; and then observing the exposed cross-section by using a scanning electron microscope, and calculating the porosity by using image analyzer software.

Specific analysis steps: Starting the image J.exe app, dragging the image directly to the operating interface, selecting the toolbar rectangle box, box-selecting a region of interest on the image, opening "Image/crop" to remove the unwanted part of the image; opening "Image/duplicate" to copy the original image X, so that the software automatically names the copied image as "X-1"; for the image X-1, opening "Image/Adjust/Threshold", and, in order to avoid errors introduced by threshold adjustment, keeping the upper and lower thresholds unchanged, using the default settings ("Default" and "Red"), checking "Dark background", and clicking "Apply"; opening "Process/Binary/Fill holes" to fill the holes inside the particles, and, if the particles stick together, opening "Process/Binary/Watershed" to separate the stuck particles apart; opening "Analyze/Analyze particles", setting the lower limit of "Size (pixel^2)" according to the previous step, checking "Add to Manager" and "Exclude on edges", and clicking "OK", so that the target particle is added to "ROI Manager". Opening the original image X, and rechecking "Show All" in "ROI Manager", so that the target particle in the image X-1 is marked in the original image X. Opening "Image/Adjust/Threshold". In order to avoid errors introduced by threshold adjustment, keeping the upper and lower thresholds unchanged, using the default settings ("Default" and "Red"), checking "Dark background", and clicking "Apply". Opening Edit/Invert directly to convert the "threshold" effect of the original image X, and then clicking "Measure" in "ROI Manager", so that the "Result" list directly displays the porosity.

### (6) Viscosity of the slurry

Taking 200 mL of slurry, leaving the slurry to stand for a specified period of time, and then using a DV-2TLV viscometer (with rotor No. 3, at a speed of 14 rpm) to measure the viscosity for 6 minutes, and then recording the viscosity result.

### (7) Fluidity of the slurry

Taking 300 mL and 400 mL of slurry separately, passing the slurry through a 200-mesh filter, and recording the time spent in passing the slurry completely through the filter.

### (8) Film resistance

Die-cutting a rolled positive electrode plate into a specimens of 38 cm × 23 cm in size, turning on the internal resistance meter, controlling the pressure to be 0.4 T, ensuring that the probe terminal is clean, and placing the positive electrode plate between the two probes. Selecting 10 points on each positive electrode plate for measuring, and averaging out the measured values. The area of the terminal is S = 153.94 mm². Calculating the film resistance R of the positive electrode plate according to R = ρl/S, where ρ represents the resistivity of the specimen, and l represents the length of the specimen.

### (9) C-rate performance (5C capacity retention rate)

Making the resulting composite positive electrode material into a 2.16 Ah pouch cell. Performing chemical formation upon completion of preparing the pouch cell. Performing a discharge test on the chemically formed cell at different rates at normal temperature 23 °C, in which the charge rate is 0.5C uniformly, and the discharge rates are 0.5C and 5C separately. Calculating the discharge capacity retention rate of the cell cycled at a 5C rate versus the discharge capacity retention rate of the cell cycled at a 0.5C rate, thereby obtaining a 5C capacity retention rate.

### (10) DCR

Making the composite positive electrode material into a pouch cell. Performing conventional chemical formation upon completion of preparing the pouch cell. Performing a discharge DCR test on the chemically formed cell at 25 °C and - 25 °C separately:

At a temperature of 25 °C, charging the cell at a current of 0.33C until the cell is fully charged (the State of Charge reaches 100%SoC), and then discharging the cell at a current of 0.33C until 50%SoC; leaving the cell to stand for 30 minutes, and recording a voltage V₁; subsequently, discharging the cell in a pulse-discharge manner at a current of 3C (I₁) for 30 seconds, and recording a voltage V₂; and then discharging the cell at a current of 0.33C until 10%SoC, leaving the cell to stand for 30 minutes, and recording a voltage V₃; and then discharging the cell in a pulse-discharge manner at a current of 3C (I₂) for 30 seconds, and recording a voltage V₄. Subsequently, at a temperature of 25 °C, charging the cell at a current of 0.33C until the cell is fully charged, and then discharging the cell at a current of 0.33C until 20%SoC; leaving the cell to stand at -25 °C for 2 hours, and recording a voltage V₅; and then discharging the cell in a pulse-discharge manner at a current of 1C (I₃) for 30 seconds, and recording a voltage V₆.

Calculating the DCR under different conditions according to the following formula: DCR = (voltage at the end of static standing - voltage at the end of pulse discharge)/pulse current. For example, DCR of the cell cycled at 25 °C until 50%SoC = (V₁ - V₂)/I₁; DCR of the cell cycled at 25 °C until 10%SoC = (V₃ - V₄)/I₂; and DCR of the cell cycled at -25 °C until 20%SoC = (V₅-V₆)/I₃.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A composite positive electrode material, **characterized in that** the composite positive electrode material comprises a composite formed by a positive active material and carbon; and, in a particle structure of the composite, a mass ratio of a carbon content inside to a carbon content on a surface is (0.8 to 2): 1.

2. The composite positive electrode material according to claim 1, **characterized in that**, in the particle structure of the composite, the ratio of the carbon content inside to the carbon content on the surface is (1 to 1.8): 1.

3. The composite positive electrode material according to claim 1 or 2, **characterized in that** the inside is a region within 60% of a radius of a particle from a center of the particle; and/or
the surface is a region beyond 60% of the radius from the center of the particle.

4. The composite positive electrode material according to any one of claims 1 to 3, **characterized in that** a total carbon mass percent of the composite positive electrode material is 0.8% to 5%.

5. The composite positive electrode material according to claim 4, **characterized in that** the total carbon mass percent of the composite positive electrode material is 1% to 2%.

6. The composite positive electrode material according to any one of claims 1 to 5, **characterized in that** particles of the composite comprise secondary particles.

7. The composite positive electrode material according to claim 6, **characterized in that** Dᵥ₅₀ of the secondary particles of the composite is 2 µm to 9 µm.

8. The composite positive electrode material according to claim 6 or 7, **characterized in that** Dᵥ₅₀ of the secondary particles of the composite is 5 µm to 9 µm.

9. The composite positive electrode material according to any one of claims 6 to 8, **characterized in that** the secondary particles of the composite are formed by agglomerating primary nanoparticles.

10. A method for preparing the composite positive electrode material according to any one of claims 1 to 9, **characterized in that** the method comprises:
providing a precursor solution, wherein a positive active material feedstock is dissolved in the precursor solution, and an insoluble metal-organic framework material is dispersed in the precursor solution;
performing crystallization on the precursor solution, so that the positive active material feedstock is crystallized with the metal-organic framework material used as a crystal nucleus, thereby obtaining a precursor; and
sintering the precursor in an inert atmosphere, so that the positive active material feedstock in the precursor reacts to form a positive active material, and the metal-organic framework material reacts to form carbon, thereby obtaining the composite positive electrode material.

11. The method for preparing the composite positive electrode material according to claim 10, **characterized in that** a mass of the metal-organic framework material is 0.2% to 4% of a total mass of the positive active material feedstock.

12. The method for preparing the composite positive electrode material according to claim 10 or 11, **characterized in that** a mass of the metal-organic framework material is 1.5% to 4% of a total mass of the positive active material feedstock.

13. The method for preparing the composite positive electrode material according to any one of claims 10 to 12, **characterized in that** the precursor solution further comprises a soluble carbon source.

14. The method for preparing the composite positive electrode material according to claim 13, **characterized in that** a total mass of the soluble carbon source and the metal-organic framework material is 1% to 10% of a total mass of the positive active material feedstock.

15. The method for preparing the composite positive electrode material according to claim 13 or 14, **characterized in that** a total mass of the soluble carbon source and the metal-organic framework material is 3% to 7% of a total mass of the positive active material feedstock.

16. The method for preparing the composite positive electrode material according to any one of claims 10 to 15, **characterized in that** the precursor assumes a secondary particle structure.

17. A positive electrode plate, **characterized in that** the positive electrode plate comprises the composite positive electrode material according to any one of claims 1 to 9, or comprises a composite positive electrode material prepared by the preparation method according to any one of claims 10 to 16.

18. A battery, **characterized in that** the battery comprises the positive electrode plate according to claim 17.

19. An electrical device, **characterized in that** the electrical device comprises the battery according to claim 18.
